# EUROPÄISCHE PATENTSCHRIFT

(11) **EP 1 175 562 B1**
(45) Veröffentlichungstag und Bekanntmachung des Hinweises auf die Patenterteilung: **13.07.2005**
(21) Anmeldenummer: 00926931.7
(22) Anmeldetag: 14.04.2000
(51) Int. Cl.: F04B 17/03, F04B 23/02

(54) **KOMPAKTES HYDRAULIKAGGREGAT**
COMPACT HYDRAULIC AGGREGATE
ENSEMBLE HYDRAULIQUE COMPACT

(30) Priorität: 05.05.1999 DE 19920563
(43) Veröffentlichungstag der Anmeldung: 30.01.2002
(73) Patentinhaber: Bosch Rexroth AG, 97816 Lohr am Main (DE)
(72) Erfinder: HELLER, Roland, D-70806 Kornwestheim (DE)
(86) Internationale Anmeldenummer: PCT/EP2000/003376
(87) Internationale Veröffentlichungsnummer: WO 2000/068572

(56) Entgegenhaltungen:
- EP-A- 0 198 250
- DE-A- 19 513 286
- US-A- 3 479 541
- US-A- 3 992 133
- US-A- 4 398 108

## Beschreibung

Die Erfindung betrifft ein kompaktes Hydraulikaggregat, das ein ein Reservoir für eine Druckflüssigkeit bildendes Gehäuse, das einen Gehäuseboden, einen Gehäusedeckel und dazwischen ein aus einem Rohrprofil hergestelltes Gehäusemittelteil aufweist, ein im Gehäuse befindlichen Elektromotor, dessen Statorblechpaket vom Gehäusemittelteil gehalten ist und der über einen Klemmenkasten an ein Stromnetz anschließbar ist, und eine sich innerhalb des Gehäuses im Bereich des Gehäusebodens befindliche, vom Elektromotor antreibbare Pumpe besitzt.

Die DE 195 13 286 A1 zeigt ein kompaktes Hydraulikaggregat, dessen Gehäusemittelteil innen axial verlaufende Rippen aufweist, von denen das Statorblechpaket des Elektromotors gehalten wird. Das Gehäusemittelteil ist ein Gußteil, an das auch ein Lagerflansch für die Welle des Elektromotors angeformt ist. Ein Klemmenkasten für den Elektromotor wird nicht erwähnt.

Bei einem aus der US-A-3 992 133 bekannten kompakten Hydraulikaggregat besteht das Gehäuse aus zwei Gußhälften.

Ein kompaktes Hydraulikaggregat mit den Merkmalen aus dem Oberbegriff des Patentanspruchs 1 ist aus der EP 0 198 250 A2 bekannt. Bei einem solchen Hydraulikaggregat kann man das Gehäuse auch als Gehäuse des Elektromotors ansehen. Rotor und Stator des Elektromotors sind, je nachdem wieviel Öl in das Reservoir eingefüllt worden ist und wieviel Druckflüssigkeit gerade von dem oder den hydraulischen Verbrauchern, die von der Pumpe mit Druckflüssigkeit versorgt werden, aufgenommen ist, mehr oder weniger weit in die Druckflüssigkeit eingetaucht. Die vom Elektromotor erzeugte und die durch die Druckflüssigkeit in das Reservoir eingebrachte Wärme wird über das Gehäuse an die Umgebung abgegeben. Unter Umständen durchläuft die Druckflüssigkeit beim Rückfluß vom hydraulischen Verbraucher zusätzlich einen Ölkühler, um den Eintrag von Wärme in das Reservoir zu reduzieren. Dieser Ölkühler kann unmittelbar am Hydraulikaggregat angebracht sein.

Das Gehäusemittelteil des bekannten Hydraulikaggregats ist im Bereich des Statorblechpakets des Elektromotors innen im Querschnitt kreisrund ausgebildet. Ein Austausch von Druckflüssigkeit zwischen den Räumen vor den beiden Stirnseiten des Statorblechpakets soll offenbar über Nuten im Statorblechpaket stattfinden. Bei dem bekannten kompakten Hydraulikaggregat ist der Innendurchmesser des Gehäusemittelteils durch den Außendurchmesser des Statorblechpakets bestimmt, so daß sich bei einem gewünschten Vorrat an Druckflüssigkeit eine bestimmte Höhe des Hydraulikaggregats ergibt, durch die das Beistellen des Hydraulikaggregats zu einer Maschine manchmal behindert ist. Zudem ist der Durchflußquerschnitt durch die die Wicklungen aufnehmenden Nuten des Statorblechpakets gering. Unter Umständen müssen zusätzliche Längsnuten in das Statorblechpaket eingebracht werden, was zu einer Sonderausführung eines Elektromotors führt.

Der Erfindung liegt die Aufgabe zugrunde, ein kompaktes Hydraulikaggregat mit den Merkmalen aus dem Oberbegriff des Patentanspruchs 1 so weiterzuentwickeln, daß es insbesondere auch, wenn Zusatzelemente angebaut werden, kostengünstig hergestellt werden kann. Ein im Bereich des Gehäusebodens anzubauendes oder angebautes elektrisches Zusatzgerät soll sicher und zuverlässig mit Strom versorgt werden können. Zudem soll bei gegebenem Vorratsvolumen an Druckflüssigkeit eine geringe Baulänge möglich sein.

Das angestrebte Ziel wird erfindungsgemäß dadurch erreicht, daß ein kompaktes Hydraulikaggregat mit den Merkmalen aus dem Oberbegriff des Patentanspruchs 1 zusätzlich mit den Merkmalen aus dem kennzeichnenden Teil dieses Patentanspruchs ausgestattet ist. Durch die Haltestege sind der Außendurchmesser des Statorblechpakets und der Innendurchmesser des Gehäusemittelteils sozusagen voneinander entkoppelt und das Gehäusemittelteil kann unabhängig von der Größe des Elektromotors entsprechend dem gewünschten Vorratsvolumen der Druckflüssigkeit und im Sinne einer geringen Baulänge des Hydraulikaggregats gestaltet werden. Zwischen den Haltestegen besteht viel Freiraum für den völlig unbehinderten Austausch von Druckflüssigkeit zwischen den beiden Räumen vor den Stimseiten des Statorblechpakets. Über die Haltestege wird im Elektromotor erzeugte Wärme nach außen geführt und über die Außenfläche des Gehäusemittelteils an die Umgebung abgegeben. Ein in dem Kabelkanal geführtes Versorgungskabel für ein Zusatzgerät am Gehäuseboden ist weitgehend vor Beschädigungen geschützt.

Vorteilhafte Ausgestaltungen eines erfindungsgemäßen kompakten Hydraulikaggregats kann man den Unteransprüchen entnehmen.

Besonders bevorzugt ist das Gehäusemittelteil gemäß Patentanspruch 2 außen vieleckig, insbesondere regelmäßig vieleckig. Dabei sollte eine Teilfläche zwischen zwei Ecken einer weiteren Teilfläche diametral gegenüberliegen, so daß das Gehäusemittelteil für eine spanende Bearbeitung gut eingespannt werden kann. Außerdem läßt sich ein außen eckiges Bauteil besser stapeln als ein rundes Bauteil. Die Haltestege verlaufen gemäß Patentanspruch 3 vorteilhafterweise jeweils mittig einer zwischen zwei Ecken liegenden äußeren Teilfläche des Gehäusemittelteils, so daß die Materialanhäufung in den Ecken nicht zu groß wird.

Besonders bevorzugt wird auch die Ausgestaltung gemäß Patentanspruch 4. Nach diesem Patentanspruch weist das Gehäusemittelteil zwischen zwei Haltestegen für das Statorblechpaket des Elektromotors einen weiteren axial verlaufenden inneren Steg auf, der in Umfangsrichtung des Gehäusemittelteils breiter als die Haltestege ist und der der Befestigung eines sich außen am Gehäuse befindlichen Überwachungselements dient. Zum Beispiel können in den weiteren Steg Gewindebohrungen eingebracht sein, um ein Ölstandsschauglas zu befestigen.

Auch dieser weitere Haltesteg befindet sich vorzugsweise mittig einer äußeren Teilfläche des vieleckigen Gehäusemittelteils, so daß außen eine ebene Montagefläche für das Überwachungselement vorhanden ist.

Wie schon angedeutet worden ist, kann das kompakte Hydraulikaggregat zusätzlich mit einem Ölkühler ausgestattet sein, der im Bereich des Gehäusebodens, z. B. noch unterhalb des Gehäusebodens angeordnet ist. Vorzugsweise wird das Lüfterrad dieses Ölkühlers von einem weiteren Elektromotor angetrieben, damit keine Welle aus dem das Reservoir bildenden Gehäuse herausgeführt werden muss. Gemäß Patentanspruch 8 ist nun in vorteilhafter Weise vorgesehen, daß das Versorgungskabel für den Elektromotor in dem axial verlaufenden Kabelkanal des Gehäusemittelteils zum Gehäusedeckel und dort insbesondere in den Klemmenkasten geführt ist. Insbesondere verläuft der Kabelkanal auch innerhalb des Gehäusebodens und des Gehäusedeckels, so daß das Kabel von außen überhaupt nicht sichtbar ist.

Ein Temperaturfühler, der z.B. zum Ein- und Ausschalten eines vorhandenen Ölkühlers verwendet Werden kann oder der, sofern ein Ölkühler nicht vorhanden ist, den die Pumpe antreibenden Elektromotor ausschaltet, wird vorteilhafterweise gemäß den Patentansprüchen 13 bis 15 angeordnet. Auch die elektrische Anschlußleitung des Temperaturfühlers verläuft also weder innerhalb noch außerhalb des Gehäuses frei.

Ein Ausführungsbeispiel eines erfindungsgemäßen kompakten Hydraulikaggregats ist in der Zeichnung dargestellt. An Hand der Figuren dieser Zeichnung wird die Erfindung nun näher erläutert.

Es zeigen
- Figur 1: einen Längsschnitt durch das mit einem Ölkühler, einem Ölstandsschauglas und einem Temperaturfühler ausgestatteten Ausführungsbeispiel und
- Figur 2: einen Schnitt durch das bloße Gehäusemittelteil entlang der Linie II-II aus Figur 1.

Das gezeigte kompakte Hydraulikaggregat besitzt ein Gehäuse 10, das einerseits die Funktion des Reservoirs für die Druckflüssigkeit, mit der gearbeitet wird, erfüllt und das darüber hinaus auch als Gehäuse eines Elektromotors betrachtet werden kann Dieses Gehäuse weist als wesentliche Teile einen Gehäusedeckel 11, einen Gehäuseboden 12 und ein Gehäusemittelteil 13 auf. Letzteres ist ein Abschnitt eines aus einer Aluminiumlegierung hergestellten Profilrohres und spanend endbearbeitet worden. Die Außenseite des Gehäusemittelteils 13 ist gleichmäßig sechzehneckig mit einzelnen Teilflächen 14 zwischen zwei Ecken gestaltet. An der Innenseite der umlaufenden Wand des Gehäusemittelteils 13 verlaufen insgesamt zwölf Haltestege 15 in Richtung der Achse 16 des Gehäusemittelteils 13 entlang. Diese Haltestege sind in vier Gruppen zu jeweils drei Haltestegen zusammengefaßt, wobei sich die drei Haltestege 15 einer Gruppe jeweils mittig von drei aufeinanderfolgenden äußeren Teilflächen 14 befinden. Zwischen den vier Gruppen von Haltestegen 15 befindet sich jeweils eine äußere Teilfläche 14, an der innen kein Haltesteg 15 vorhanden ist. Die Haltestege 15 sind von der einen Stirnseite des Gehäusemittelteils 13 aus über eine bestimmte axiale Erstreckung abgedreht, so daß an jedem Haltesteg 15 eine radial nach innen weisende kreiszylindrische Teilfläche 17, die mit den entsprechenden Teilflächen 17 der anderen Haltestege 15 auf einem Kreiszylinder liegt, und eine axiale Anlageschulter 18 entstanden sind Von der einen Seite aus ist der das Statorblechpaket 19 und die Wicklungen 20 aufweisende Stator eines Elektromotors 21 bis zur Anlageschulter 18 in das Gehäusemittelteil 13 mit Preßpassung eingeschoben.

Innen mittig einer der Teilflächen 14 zwischen zwei Gruppen von Haltestegen 15 ist das Gehäuseteil 13 mit einem weiteren in Längsrichtung verlaufenden Steg 25 versehen, der sich weniger weit radial nach innen als die Haltestege 15 erstreckt und in Umlaufrichtung des Gehäusemittelteils 13 stärker als die Haltestege 15 ist. Im Bereich des Haltesteges 25 sind in das Gehäusemittelteil 13 in Achsrichtung übereinanderliegend zwei Löcher 26 gebohrt, die mit einem Gewinde versehen worden sind. Durch den Steg 25 sind die Locher 26 lang genug geworden, um der Befestigung eines Olstandsschauglases 27 mittels zweier Schrauben 28 zu dienen. Das gezeigte Hydraulikaggregat ist für den Betrieb in einer vertikalen Anordnung, in der die Achse des Gehäusemittelteils 13 vertikal verläuft, vorgesehen. Die in dieser Anordnung untere Schraube 28 taucht innen immer ins Öl ein. Über eine Sackbohrung in ihr besteht nach der Art von kommunizierenden Röhren eine fluidische Verbindung zwischen dem Inneren des Gehäuses 10 und dem Schauglas 27. Die obere Schraube 28 ist genauso ausgebildet wie die untere Schraube 28, damit bei einem sich veränderndem Flüssigkeitsspiegel Luft aus dem Schauglas 27 entweichen oder in das Schauglas einströmen kann. Weil der Steg 25 sich mittig einer Teilfläche 14 befindet, liegt das Schauglas 27 mit entsprechenden Anlageflachen flächig an der entsprechenden Teilfläche 14 des Gehäusemittelteils 13 an, ohne unzulässig verspannt zu sein. Zwischen den Stegen 15 und 25 ist das Gehäusemittelteil 13 innen kreiszylindrisch rund ausgebildet.

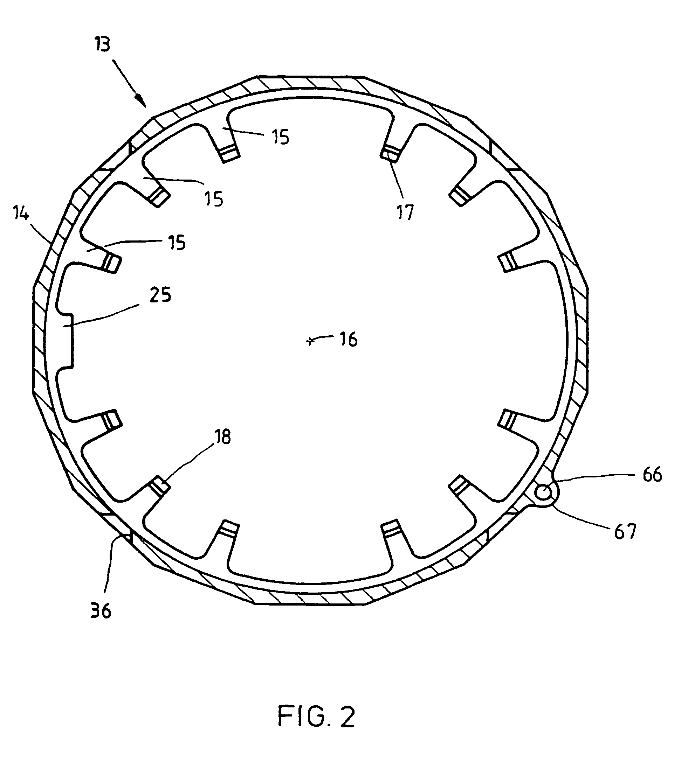

An jeder Stirnseite besitzt das Gehäusemittelteil 13 eine von dieser Stirnseite aus sich über ein gewisses axiales Maß erstreckende Ausdrehung 32, die nach radial außen bis in den Bereich der umlaufenden Wand des Gehäusemittelteils 13 reicht, in deren Bereich also die Stege 15 und 25 voll abgedreht sind. In die eine Ausnehmung 32 greift der Gehäusedeckel 11 und in die andere Ausdrehung der Gehäuseboden 12 mit jeweils einem Zentrierbund 33 ein. In einer umlaufenden Nut jedes Zentrierbundes 33 befindet sich ein Dichtring 34, durch den der Spalt zwischen den Gehauseteilen abgedichtet ist. Durch im Bereich der Ausdrehungen 32 und der Zentrierbunde 33 radial eingedrehte Flachkopfschrauben 35, die wie man den in Figur 2 sichtbaren kegelförmigen Öffnungen 36 in der umlaufenden Wand des Gehäusemittelteils 13 ersehen kann, mittig jeweils einer Teilfläche 14 liegen, sind Gehäusedeckel, Gehäuseboden und Gehäusemittelteil aneinander befestigt.

Die Welle 40 des Rotors des Elektromotors 21 ist mit jeweils einem Lagerzapfen an jedem Ende in einem Wälzlager 41 bzw 42 gelagert, das in eine Aufnahme des Gehäusedeckels 11 bzw. des Gehäusebodens 12 eingesetzt ist. Knapp über dem Wälzlager 42 im Gehäuseboden 12 trägt die Welle 40 verdrehsicher einen Exzenterring 43, in Richtung auf den die Radialkolben 44 einzelner am Gehäuseboden 12 befestigter Pumpenelemente 45 einer Radialkolbenpumpe 46 von einer Druckfeder 47 beaufschlagt sind. Bei Rotation der Welle 40 führen die Radialkolben 44 Saughübe, während derer sie Druckflüssigkeit aus dem Inneren des Gehäuses 10 ansaugen und Druckhübe aus, während derer sie die angesaugte Druckflüssigkeit zu einem nicht näher gezeigten Druckausgang verdrängen.

Im Gehäusedeckel 11 befindet sich eine Einfüllöffnung 51, die mit einem Schraubverschluß 52 verschlossen ist. Außerdem weist der Gehäusedeckel 11 eine in Richtung der Achse 16 der Welle 40 zunächst nach außen offene Vertiefung 53 auf, durch die ein Klemmenkasten für das Hydraulikaggregat gebildet ist. Der Klemmenkasten 53 ist unter Zwischenlage einer Dichtung durch eine Platte 54 abgedeckt. Am Boden des Klemmenkastens 53 ist ein aus einem elektrisch isolierenden Material gefertigter Klemmenträger befestigt, an dem mehrere Klemmen zum Fixieren und Verbinden von elektrischen Leitungen vorgesehen sind. Ein Leitungsbündel fuhrt durch eine Öffnung 55 im Boden des Klemmenkastens 53 in das Innere des Gehäuses 10 zu den Wicklungen des Elektromotors 21. Im Boden des Klemmenkastens 53 ist weiterhin eine durchgehende Gewindebohrung 56 vorgesehen, in die vom Inneren des Gehäuses 10 aus ein Temperaturfühler 57 eingeschraubt ist. Die Anschlußleitungen des Temperaturfühlers 57 führen unmittelbar durch den in die Gewindebohrung 56 eingeschraubten Gewindeansatz des Temperaturfühlers hindurch in den Klemmenkasten 53, ohne daß sie im Inneren des Gehäuses 10 frei hängen würden. Ein Anschlußkabel fur die Versorgung des Elektromotors 21 kann durch die Verschraubung 58 in den Klemmenkasten 53 eintreten.

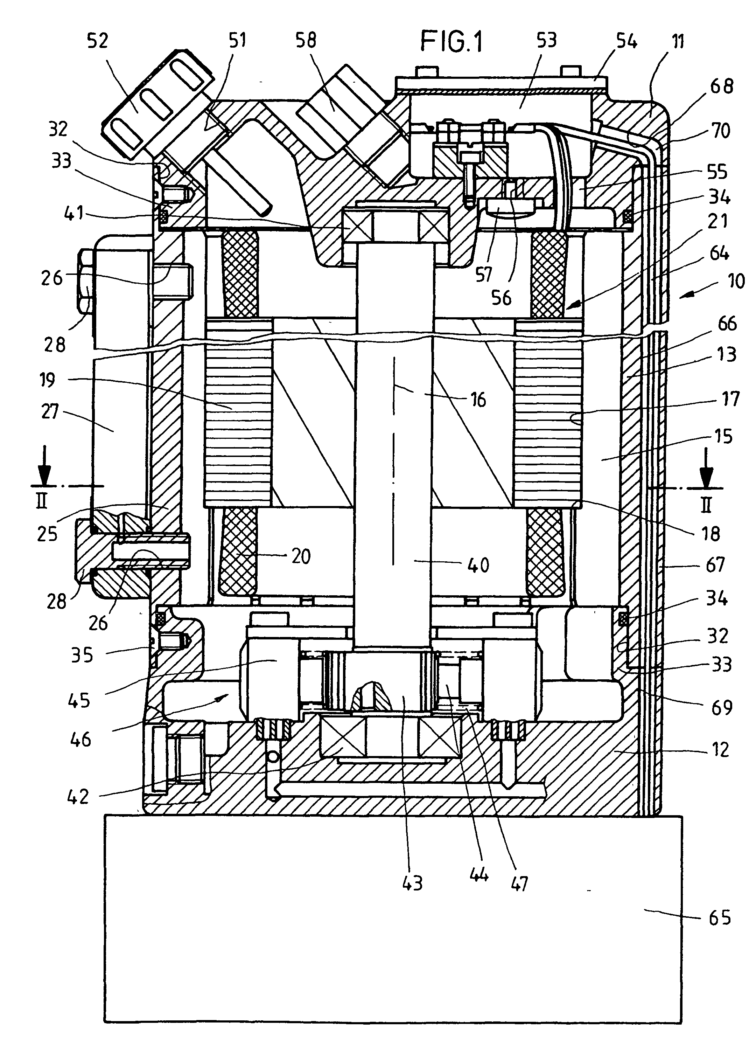

Unterhalb des Gehäusebodens 12 ist ein nur schematisch dargestellter Ölkühler 65 mit einem elektrisch angetriebenen Lüfterrad angeordnet. Der Elektromotor des Ölkühlers wird über ein Kabel 64 an Spannung gelegt, das vom Elektromotor in den Klemmenkasten 53 geführt ist. Damit dieses Kabel 64 einerseits nicht außen am Hydraulikaggregat zugänglich ist und damit beschädigt werden kann und die Handhabung des Hydraulikaggregats erschwert und andererseits nicht, wie bei einem Verlauf des Kabels im Gehäuseinneren, zusätzliche Dichtstellen notwendig sind, ist in der Wand des Gehäusemittelteils 13 ein Kanal 66 vorgesehen, der in Axialrichtung längs des Gehäusemittelteils 13 verläuft und außen an den Dichtringen 34 vorbeifuhrt. Damit genügend Gehäusematerial für einen rundum geschlossenen Kanal 66 vorhanden ist, ist an das Gehäusemittelteil 13 im Bereich einer Ecke zwischen zwei Teilflächen 14 eine Auswölbung 67 vorhanden. Es wird darauf hingewiesen, daß diese Auswölbung 67 in Figur 1 an einer anderen Stelle als in Figur 2 eingezeichnet ist, um sie in dem Schnitt nach Figur 1 darstellen zu können. Die Auswölbung 67 setzt sich in entsprechenden Auswölbungen des Gehäusedeckels 11 und des Gehäusebodens 12 fort, um auch den Kanal 66 in diese Teile hinein verlängern zu können. Am Gehäuseboden öffnet sich der Kanal 66 direkt axial in den Olkühler 65. Im Gehäusedeckel 11 dagegen knickt der Kanal 66 aus der axialen Richtung in eine Schrägbohrung 68 ab, die von einer Wand des Klemmenkastens 53 ausgeht. Vom Klemmenkasten 53 aus verläuft das Kabel 64 durch die Schragbohrung 68 und den Längskanal 66 hindurch zum Ölkühler 65. Es ist somit vor jeder Beschädigung geschützt

## Patentansprüche

1. Kompaktes Hydraulikaggregat mit einem ein Reservoir für eine Druckflüssigkeit bildenden Gehäuse (10), das einen Gehäuseboden (12), einen Gehäusedeckel (11) und dazwischen ein aus einem Rohrprofil hergestelltes Gehäusemittelteil (13) aufweist, mit einem im Gehäuse (10) befindlichen Elektromotor (21), dessen Statorblechpaket (19) vom Gehäusemittelteil (13) gehalten ist und der über einen Klemmenkasten (53) an ein Stromnetz anschließbar ist, und mit einer sich innerhalb des Gehäuses (10) im Bereich des Gehäusebodens (12) befindlichen, vom Elektromotor (21) antreibbaren Pumpe (46),
**dadurch gekennzeichnet, daß** sich der Klemmenkasten (53) am Gehäusedeckel (11) befindet und daß das Gehäusemittelteil (13) axial verlaufende innere Haltestege (15), von denen das Statorblechpaket (19) des Elektromotors (21) gehalten ist, und einen axial verlaufenden Kabelkanal zur Aufnahme eines vom Gehäuseboden (12) zum Gehäusedeckel (11) geführten Versorgungskabels für ein elektrisches Gerät im Bereich des Gehäusebodens (12) aufweist.

2. Kompaktes Hydraulikaggregat nach Anspruch 1, **dadurch gekennzeichnet, daß** das Gehäusemittelteil (13) außen insbesondere regelmäßig vieleckig ist.

3. Kompaktes Hydraulikaggregat nach Anspruch 2, **dadurch gekennzeichnet, daß** ein Haltesteg (15) jeweils mittig einer zwischen zwei Ecken liegenden äußeren Teilfläche (14) des Gehäusemittelteils (13) verläuft.

4. Kompaktes Hydraulikaggregat nach einem vorhergehenden Anspruch, **dadurch gekennzeichnet, daß** das Gehäusemittelteil (13) zwischen zwei Haltestegen (15) einen weiteren axial verlaufenden inneren Steg (25) aufweist, der in Umfangsrichtung des Gehäusemittelteils (13) breiter als die Haltestege (15) ist und der der Befestigung eines sich außen am Gehäuse (10) befindlichen Überwachungselements (27) dient.

5. Kompaktes Hydraulikaggregat nach Anspruch 4, **dadurch gekennzeichnet, daß** sich der weitere Steg (25) weniger weit radial nach innen als die Haltestege (15) erstreckt.

6. Kompaktes Hydraulikaggregat nach Anspruch 4 oder 5, **dadurch gekennzeichnet, daß** der Winkelabstand zwischen den beiden dem weiteren Steg (25) benachbarten Haltestegen (15) größer ist als der Winkelabstand von einem benachbarten Haltesteg (15) zum übemächsten Haltesteg (15).

7. Kompaktes Hydraulikaggregat nach den Ansprüchen 5 und 6, **dadurch gekennzeichnet, daß** dem weiteren Steg (25) bezüglich der Achse (16) des Gehäusemittelteils (13) gegenüberliegend zwischen zwei Haltestegen (15) eine solch große Lücke wie zwischen den beiden dem weiteren Steg (25) benachbarten Haltestegen (15) besteht.

8. Kompaktes Hydraulikaggregat nach einem vorhergehenden Anspruch, **dadurch gekennzeichnet, daß** im Bereich des Gehäusebodens (12) ein elektrisches Gerät, insbesondere ein Ölkühler (65) mit einem Elektromotor und mit einem vom Elektromotor antreibbaren Lüfterrad, angeordnet ist und daß das Versorgungskabel (64) für das elektrische Gerät in dem axial verlaufenden Kabelkanal (66) des Gehäusemittelteils (13) zum Gehäusedeckel (11) geführt ist.

9. Kompaktes Hydraulikaggregat nach Anspruch 8, **dadurch gekennzeichnet, daß** das Gehäusemittelteil (13) eine in axialer Richtung verlaufende Wölbung (67) nach außen aufweist, innerhalb der der Kabelkanal (66) verläuft.

10. Kompaktes Hydraulikaggregat nach Anspruch 8 oder 9, **dadurch gekennzeichnet, daß** sich der Kabelkanal (66) radial außerhalb einer zwischen dem Gehäusemittelteil (13) und dem Gehäuseboden (12) bzw. dem Gehäusedeckel (11) angeordneten Dichtung (34) befindet.

11. Kompaktes Hydraulikaggregat nach Anspruch 8, 9 oder 10, **dadurch gekennzeichnet, daß** sich der Kabelkanal (66) des Gehäusemittelteils (13) in Bohrungen (68, 69, 70) des Gehäusedeckels (11) und des Gehäusebodens (12) fortsetzt.

12. Kompaktes Hydraulikaggregat nach Anspruch 11, **dadurch gekennzeichnet, daß** das Gehäusemittelteil (13) von den beiden Enden her innen ausgedreht ist und daß Gehäuseboden (12) und Gehäusedeckel (11) mit einem Zentrierbund (33) in jeweils eine Ausdrehung (32) eintauchen, daß in der Ausdrehung (32) zwischen dem Gehäusemittelteil (13) und dem Gehäuseboden (12) bzw. dem Gehäusedeckel (11) eine Radialdichtung (34) angeordnet ist und daß der Kabelkanal (66) außerhalb der Ausdrehung (32) im Gehäusemittelteil (13) verläuft.

13. Kompaktes Hydraulikaggregat nach einem vorhergehenden Anspruch, **dadurch gekennzeichnet, daß** im Gehäusedeckel (11) unterhalb des Klemmenkastens (53) ein elektrischer Temperaturfühler (57) angeordnet ist, dessen elektrische Anschlußleitungen vom Klemmenkasten (53) aus allenfalls durch Material des Gehäusedeckels (11) unmittelbar zum Temperaturfühler (57) führen.

14. Kompaktes Hydraulikaggregat nach Anspruch 13, **dadurch gekennzeichnet, daß** der Temperaturfühler (57) in ein von dem Klemmenkasten (53) ausgehendes Loch (56) eingesetzt, insbesondere eingeschraubt ist.

15. Kompaktes Hydraulikaggregat nach Anspruch 14, **dadurch gekennzeichnet, daß** der Temperaturfühler (57) von der Innenseite des Gehäusedeckels (11) aus in ein von dem Klemmenkasten (53) ausgehendes Loch (56) eingesetzt, insbesondere eingeschraubt ist, wobei durch dieses Loch (56) auch die elektrischen Anschlußleitungen des Temperaturfühlers (57) gehen.

## Claims

1. A compact hydraulic power unit having a housing (10) forming a reservoir for a pressure fluid and comprising a housing bottom (12), a housing cover (11) and a housing middle part (13) therebetween in the form of a profiled tube, having, located in the housing (10), an electric motor (21) whose stator laminated core (19) is held by the housing middle part (13), and which can be connected to an electrical network via a terminal box (53), and having a pump (46) located within the housing (10) in the region of the housing bottom (12) and capable of being driven by the electric motor (21),
**characterized by** the fact that the terminal box (53) is located on the housing cover (11) and that the housing middle part (13) comprises axially extending internal holding webs (15), by which the stator laminated core (19) of the electric motor (21) is held, and an axially extending cable duct for the accommodation of a supply cable for an electrical device in the region of the housing bottom (12), said supply cable being conducted from the housing bottom (12) to the housing cover (11).

2. A compact hydraulic power unit according to claim 1, **characterized by** the fact that the housing middle part (13) has the external shape of, in particular, a regular polygon.

3. A compact hydraulic power unit according to claim 2, **characterized by** the fact that a holding web (15) extends at the centre, in each case, of an external partial surface (14) of the housing middle part (13) lying between two corners.

4. A compact hydraulic power unit according to any of the preceding claims, **characterized by** the fact that the housing middle part (13) comprises a further axially extending internal web (25) between two holding webs (15) which is broader m the circumferential direction of the housing middle part (13) than the holding webs (15) and which serves to secure a monitoring element (27) located externally on the housing (10).

5. A compact hydraulic power unit according to claim 4, **characterized by** the fact that the further web (25) extends radially inward less far than the holding webs (15).

6. A compact hydraulic power unit according to claim 4 or 5, **characterized by** the fact that the angular distance between the two holding webs (15) adjacent to the further web (25) is greater than the angular distance from an adjacent holding web (15) to the next but one holding web (15).

7. A compact hydraulic power unit according to claims 5 and 6, **characterized by** the fact that, opposite the further web (25) relative to the axis (16) of the housing middle part (13), there exists between two holding webs (15) a gap of the same size as the gap between the two holding webs (15) adjacent to the further web (25).

8. A compact hydraulic power unit according to any of the preceding claims, **characterized by** the fact that an electrical device, in particular an oil cooler (65), having an electric motor and having a fan wheel driven by the electric motor is arranged in the region of the housing bottom (12), and by the fact that the supply cable (64) for the electrical device is conducted in the axially extending cable duct (66) of the housing middle part (13) to the housing cover (11).

9. A compact hydraulic power unit according to claim 8, **characterized by** the fact that the housing middle part (13) has a curvature (67) extending axially outward, within which the cable duct (66) extends.

10. A compact hydraulic power unit according to claim 8 or 9, **characterized by** the fact that the cable duct (66) is located radially outside a seal (34) arranged between the housing middle part (13) and the housing bottom (12) or the housing cover (13).

11. A compact hydraulic power unit according to claim 8, 9 or 10, **characterized by** the fact that the cable duct (66) of the housing middle part (13) continues in holes (68, 69, 70) drilled in the housing cover (11) and the housing bottom (12).

12. A compact hydraulic power unit according to claim 11, **characterized by** the fact that the housing middle part (13) is hollowed out inward from the two ends and by the fact that the housing bottom (12) and housing cover (11) each engage by means of a cantering collar (33) into a hollowed-out portion (32), by the fact that a radial seal (34) is arranged in the hollowed-out portion (32) between the housing middle part (13) and the housing bottom (12) or the housing cover (11), and by the fact that the cable duct (66) extends outside the hollowed out portion (32) in the housing middle part (13).

13. A compact hydraulic power unit according to any of the preceding claims,
**characterized by** the fact that an electrical temperature sensor (57) is arranged in the housing cover (11) below the terminal box (53) and its electrical connection wires lead from the terminal box (53), at most through material of the housing cover (11), directly to the temperature sensor (57).

14. A compact hydraulic power unit according to claim 13, **characterized by** the fact that the temperature sensor (57) is inserted, especially screwed, into a hole (56) extending from the terminal box (53).

15. A compact hydraulic power unit according to claim 14, **characterized by** the fact that the temperature sensor (57) is inserted, especially screwed, from the inside of the housing cover (11) into a hole (56) extending from the terminal box (53), the electrical connection wires of the temperature sensor (57) also passing through this hole (56).

## Revendications

1. Une centrale hydraulique compacte, dotée d'un corps (10) formant un réservoir pour fluide de pression et présentant un fond (12) de corps, un couvercle (11) de corps et, entre les deux, une pièce (13) médiane de corps constituée de tube profilé, dotée d'un moteur (21) électrique disposé dans le corps (10), dont l'empilage (19) de tôles du stator est maintenu par la pièce (13) médiane de corps et pouvant être raccordé à un réseau électrique à l'aide d'un boîtier (53) de connexion, et dotée d'une pompe (46) disposée à l'intérieur du corps (10), à proximité du fond (12) de corps, et pouvant être entraînée par le moteur (21) électrique,
**caractérisée en ce que** le boîtier (53) de connexion est situé au niveau du couvercle (11) de corps et que la pièce (13) médiane de corps présente des entretoises (15) de maintien internes, orientées dans la direction axiale, qui maintiennent l'empilage (19) de tôles du stator du moteur (21) électrique, et un canal de câble, disposé dans la direction axiale, permettant de recevoir et de guider du fond (12) de corps jusqu'au couvercle (11) de corps un câble d'alimentation pour un appareil électrique disposé au niveau du fond (12) de corps.

2. Une centrale hydraulique compacte selon la revendication n° 1,
**caractérisée en ce que** la pièce (13) médiane de corps présente extérieurement une forme de polygone, en particulier régulier.

3. Une centrale hydraulique compacte selon la revendication n° 2,
**caractérisée en ce que** chaque entretoise (15) de maintien s'étend au milieu d'une surface (14) partielle extérieure de la pièce (13) médiane de corps, située entre deux angles.

4. Une centrale hydraulique compacte selon une revendication précédente,
**caractérisée en ce que** la pièce (13) médiane de corps présente une entretoise (25) intérieure supplémentaire, disposée entre deux entretoises (15) de maintien, qui s'étend dans la direction axiale, qui dans la direction de la périphérie de la pièce (13) médiane de corps est plus large que les entretoises (15) de maintien et qui sert à fixer un élément (27) de surveillance placé extérieurement sur le corps (10).

5. Une centrale hydraulique compacte selon la revendication n° 4,
**caractérisée en ce que** l'étendue radiale vers l'intérieur de l'entretoise (25) supplémentaire est inférieure à celle des entretoises (15) de maintien.

6. Une centrale hydraulique compacte selon la revendication n° 4 ou n° 5,
**caractérisée en ce que** la distance angulaire entre les deux entretoises (15) de maintien avoisinant l'entretoise (25) supplémentaire est supérieure à la distance angulaire de l'une des entretoises (15) de maintien voisines à l'entretoise (15) de maintien suivante.

7. Une centrale hydraulique compacte selon la revendication n° 5 et n° 6,
**caractérisée en ce qu'**en face de l'entretoise (25) supplémentaire par rapport à l'axe (16) de la pièce (13) médiane de corps, entre deux entretoises (15) de maintien, il y a un évidement aussi grand qu'entre les deux entretoises (15) de maintien avoisinant l'entretoise (25) supplémentaire.

8. Une centrale hydraulique compacte selon une revendication précédente,
**caractérisée en ce qu'**un appareil électrique, en particulier un refroidisseur (65) d'huile, doté d'un moteur électrique et d'une roue de ventilation pouvant être entraînée par le moteur électrique, est disposé à proximité du fond (12) dé corps et que le câble (64) d'alimentation de l'appareil électrique est guidé jusqu'au couvercle (11) de corps par le canal (66) de câble, s'étendant dans la direction axiale, de la pièce (13) médiane de corps.

9. Une centrale hydraulique compacte selon la revendication n° 8,
**caractérisée en ce que** la pièce (13) médiane de corps présente une boursouflure (67) extérieure, s'étendant dans la direction axiale, dans laquelle évolue le canal (66) de câble.

10. Une centrale hydraulique compacte selon la revendication n° 8 ou n° 9,
**caractérisée en ce que** le canal (66) de câble est situé extérieurement, dans la direction radiale, par rapport à une étanchéité (34) disposée entre la pièce (13) médiane de corps et le fond (12) de corps ou le couvercle (11) de corps, selon le cas.

11. Une centrale hydraulique compacte selon la revendication n° 8, n° 9 ou n° 10, **caractérisée en ce que** le canal (66) de câble de la pièce (13) médiane de corps est poursuivi dans des alésages (68, 69, 70) du couvercle (11) de corps et du fond (12) de corps.

12. Une centrale hydraulique compacte selon la revendication n° 11,
**caractérisée en ce que** la pièce (13) médiane de corps a été tournée intérieurement à partir de ses deux extrémités et que le fond (12) de corps et le couvercle (11) de corps pénètrent dans un évidement (32) chacun de par une collerette (33) de centrage, qu'un joint (34) d'étanchéité radial est disposé dans l'évidement (32) entre la pièce (13) médiane de corps et d'une part le fond (12) de corps, d'autre part le couvercle (11) de corps, et que le canal (66) de câble évolue à l'extérieur de l'évidement (32) dans la pièce (13) médiane de corps.

13. Une centrale hydraulique compacte selon une revendication précédente, **caractérisée en ce que** dans le couvercle (11) de corps, sous le boîtier (53) de connexion, est disposé un capteur (57) de température électrique, dont les câbles de raccordement électrique vont immédiatement du boîtier (53) de connexion au capteur (57) de température, en traversant tout au plus du matériau du couvercle (11) de corps.

14. Une centrale hydraulique compacte selon la revendication n° 13,
**caractérisée en ce que** le capteur (57) de température est inséré, en particulier vissé, dans un trou (56) partant du boîtier (53) de connexion.

15. Une centrale hydraulique compacte selon la revendication n° 14,
**caractérisée en ce que** le capteur (57) de température est inséré, en particulier vissé, à partir de la face intérieure du couvercle (11) de corps dans un trou (56) partant du boîtier (53) de connexion, cependant que ce trou (56) offre également le passage aux câbles de raccordement électrique du capteur (57) de température.
